# EUROPÄISCHE PATENTSCHRIFT

(11) **EP 3 765 577 B1**
(45) Veröffentlichungstag und Bekanntmachung des Hinweises auf die Patenterteilung: **31.05.2023**
(21) Anmeldenummer: 19708814.9
(22) Anmeldetag: 27.02.2019
(51) Int. Cl.: C09J 133/00, D03D 1/00, D03D 11/00, D03D 13/00, C09J 7/29, C09J 7/21, D03D 15/283, D03D 15/47, D03D 15/50, D03D 15/56, C09J 7/38, H02G 3/04

(54) **KLEBEBAND INSBESONDERE WICKELBAND**
ADHESIVE TAPE, IN PARTICULAR WRAPPING TAPE
BANDE ADHÉSIVE, EN PARTICULIER BANDE ENVELOPPANTE

(30) Priorität: 14.03.2018 DE 202018101435 U
(43) Veröffentlichungstag der Anmeldung: 20.01.2021
(73) Patentinhaber: Certoplast Technische Klebebänder GmbH, 42285 Wuppertal (DE)
(72) Erfinder: LEERMANN, Timo, 42369 Wuppertal (DE)
(74) Vertreter: Andrejewski - Honke Patent- und Rechtsanwälte Partnerschaft mbB
(86) Internationale Anmeldenummer: PCT/EP2019/054895
(87) Internationale Veröffentlichungsnummer: WO 2019/174918

(56) Entgegenhaltungen:
- EP-A1- 2 322 385
- EP-A1- 2 441 813
- US-A1- 2017 145 603

## Beschreibung

Die Erfindung betrifft ein Wickelband zum Ummanteln von Kabeln in Automobilen, mit einem als Monogewebe ausgebildeten abriebfesten textilen Träger, und mit einer Klebebeschichtung auf zumindest einer Seite des Trägers.

Anforderungen an Klebebänder und insbesondere Wickelbänder zum Ummanteln von Kabeln in Automobilen ergeben sich nicht nur dahingehend, dass eine besondere Medienbeständigkeit gegenüber beispielsweise Öl und Benzin und auch eine große Temperaturbeständigkeit gefordert wird. Tatsächlich sollen solche Wickelbänder im Bereich zwischen minus 50° C bzw. minus 40° C bis zu plus 150° C und mehr eingesetzt werden können. Darüber hinaus werden geringe Schallemissionen angestrebt, beispielsweise derart, dass Klappergeräusche eines derart umwickelten Kabelbaums oder Kabelabzweiges möglichst verhindert werden.

Darüber hinaus wird eine hohe Abriebbeständigkeit für derartige Wickelbänder gefordert, wie dies beispielsweise im Stand der Technik nach der WO 2005/085379 A1 im Detail beschrieben wird. Die Abriebbeständigkeit lässt sich dabei in Anlehnung an die Norm LV 312 bestimmen. Um eine hohe Abriebbeständigkeit zu erreichen, wird beim Stand der Technik ein Laminataufbau vorgeschlagen, der sich aus einer ersten Deckschicht, einer zweiten Deckschicht und einer die beiden Deckschichten verbindenden Zwischenschicht zusammensetzt. Das ist produktionstechnisch aufwendig.

Darüber hinaus kennt man durch die EP 2 322 385 A1 ein quer einreißbares Gewebeklebeband mit hoher Abriebfestigkeit. Dabei ist die Fadenstärke in dtex der Schussfäden größer als die Fadenstärke in dtex der Kettfäden ausgelegt.

Auf diese Weise soll eine ausreichende Verbundfestigkeit des Trägergewebes erzielt werden. Außerdem soll nach wie vor eine gute Handeinreißbarkeit in Richtung der Schussfäden sichergestellt werden. Gleichzeitig sind die Schussfäden mit einer Abriebfestigkeit gemäß der Klasse größer oder gleich C und insbesondere D gemäß LV 312 (2009) ausgerüstet, wie dies dort im Detail beschrieben wird.

Durch die EP 2 441 813 A1 ist ein hoch abriebbeständiges Klebeband bekannt geworden. Dieses verfügt über ein streifenförmiges Substrat, eine Klebebeschichtung und eine Abdeckschicht. Dadurch soll insgesamt ein kostengünstiges Klebeband mit hoher Abriebbeständigkeit zur Verfügung gestellt werden.

Das bekannte Klebeband bzw. Wickelband entsprechend der EP 2 322 385 A1 mag zwar insgesamt die für Anwendungen im Automobilbereich erforderliche Abriebfestigkeit aufweisen. Hierzu trägt auch bei, dass die Kett- und Schussfäden aus Polyester ausgelegt sein können. Alternativ hierzu sind auch Schussfäden aus Polyamid denkbar. Allerdings werden neuerliche Anforderungen zur Schnittfestigkeit nicht oder nicht ausreichend erfüllt. Tatsächlich wird heutzutage für Klebebänder in Kraftfahrzeugen ergänzend zu den zuvor beschriebenen Anforderungen eine erhöhte Schnittfestigkeit oder auch Schlagfestigkeit gefordert, wie sie Gegenstand der LV 312-3 (2009) ist. Derartige Anforderungen zur Schlagfestigkeit oder auch Schnittfestigkeit ergeben sich unter anderem aufgrund der Tatsache, dass Kraftfahrzeuge heutzutage oftmals über rein elektrisch betriebene Komponenten wie beispielsweise Türschlösser verfügen.

Kommt es bei einem derartig aufgebauten Kraftfahrzeug beispielsweise zu einem Seitenaufprall, so besteht die Gefahr, dass elektrische Versorgungsleitungen für die fraglichen Türschlösser beim Seitenaufprall gekappt werden, so dass eintreffendes Rettungspersonal die im Innern befindlichen Insassen nicht oder nur schwer befreien kann, weil hierzu zunächst die zugehörige Tür mechanisch geöffnet werden muss. Jedenfalls ergeben sich heutzutage zunehmend Anforderungen dergestalt, dass die elektrische Energieversorgung insbesondere im Anschluss an ein Unfallgeschehen aufrecht erhalten bleibt bzw. zumindest für eine gewisse Zeit noch sichergestellt werden kann. Das setzt Klebebänder und insbesondere Wickelbänder zum Ummanteln von Kabeln in Automobilen voraus, die über eine erhöhte Schnittfestigkeit bzw. Schlagfestigkeit verfügen, welche von bisherigen Ausführungsformen nicht geliefert wird.

Dementsprechend liegt der vorliegenden Erfindung das technische Problem zugrunde, ein derartiges Wickelband zum Ummanteln von Kabeln in Automobilen so weiterzuentwickeln, dass nicht nur die erforderliche Abriebbeständigkeit beobachtet wird, sondern auch eine gegenüber dem Stand der Technik erhöhte Schnittfestigkeit bzw. Schlagfestigkeit.

Zur Lösung dieser technischen Problemstellung ist ein gattungsgemäßes Wickelband im Rahmen der Erfindung dadurch gekennzeichnet, dass das Monogewebe zumindest dreilagig ausgebildet ist, wobei nicht miteinander verbundene Kettfäden sowohl eine äußere Schicht als auch eine innere Schicht bilden, und wobei eine Zwischenschicht aus ganz oder teilweise aus einem Elastomer hergestellten Schussfäden vorgesehen ist, deren Bindungspunkte mit der äußeren Schicht nicht mit denjenigen Bindungspunkten der inneren Schicht zusammenfallen.

Im Rahmen der Erfindung wird also zunächst einmal und insgesamt auf ein Monogewebe zurückgegriffen, also ein Gewebe, das vorliegend aus drei Schichten aufgebaut ist, allerdings insgesamt ein einziges Gewebe definiert. Dabei wird sowohl die äußere als auch die innere Schicht des Gewebes von nicht miteinander verbundenen Kettfäden gebildet, die in Verbindung mit den Schutzfäden insgesamt abriebfest ausgebildet sind. Das heißt, sowohl die innere Schicht des Gewebes als auch die äußere Schicht des Gewebes genügen zumindest der Abriebklasse C nach LV 312-1 (2009). Insbesondere erfüllen die beiden Schichten des Gewebes sogar wenigstens die Klasse D nach LV 312-1. Das erreicht die Erfindung vorteilhaft dadurch, dass als Kettfäden beispielsweise solche aus PE (Polyethylen), insbesondere aus sogenanntem UHMWPE (Ultra-High-Molecular-Weight-Polyethylen) eingesetzt werden. Derartige Fasern bzw. Fäden sind unter anderem unter dem Markennamen "Dyneema" bekannt und verfügen über Zugfestigkeiten von 3 bis 4 GPA. Außerdem werden feinheitsbezogene Höchstzugkräfte für solche UHMWPE-Fäden von wenigstens 30 cN/dtex beobachtet. Die Schussfäden sind erfindungsgemäß ganz oder teilweise aus dem Elastomer hergestellt.

Außerdem hat es sich bewährt, wenn die Kettfäden aus Polyamid (PA) oder auch Polyester (PET) hergestellt sein. Vergleichsbares gilt für die Schussfäden. Auch Mischformen sind denkbar. Ferner sind die Fäden zugleich schnittfest ausgebildet. Tatsächlich kann insgesamt eine schlagfest ausgelegte Schicht entsprechend der Norm LV 312-3 (2009) des Gewebes realisiert werden. Das gilt sowohl für die innere Schicht als auch für die äußere Schicht. Die Fäden, d. h. die Kettfäden und/oder Schussfäden, können auch als Bikomponentenfäden ausgelegt sein.

In diesem Fall verfügen die fraglichen Bikomponentenfäden über einen Fadenkern aus beispielsweise UHMWPE oder auch aus Polyamid, welcher eine äußere Beschichtung mit natürlichen Fasern, Zellulosefasern oder auch feuerbeständigen oder feuerfesten Fasern aufweist.

Die Anzahl der Kettfäden in dem fraglichen erfindungsgemäßen Monogewebe mag zwischen 8 Kettfäden/cm bis 50 Kettfäden/cm angesiedelt sein. Ähnliche Fadenzahlen zwischen 8/cm bis 50/cm werden auch für die Schussfäden beobachtet. Tatsächlich können sogar bis zu 70 Schussfäden/cm realisiert werden. Im Gegensatz zu den abriebfesten Kettfäden sind die Schussfäden vorteilhaft ganz oder teilweise aus einem Elastomer hergestellt. Auch die Schussfäden können insgesamt als Bikomponentenfäden ausgebildet sein.

In diesem Fall greift die Erfindung für die Schussfäden erneut auf einen Fadenkern aus beispielsweise UHMWPE, aus Polyamid oder auch aus Polyester zurück, wie dies grundsätzlich auch für die Kettfäden zum Einsatz kommt. Die als Bikomponentenfäden ausgebildeten Schussfäden sind dann noch mit natürlichen zellulosischen oder synthetischen Fasern als elastomere Fasern bedeckt, die den Schussfäden eine gewisse Elastizität verleihen. In diesem Zusammenhang hat es sich darüber hinaus bewährt, wenn die Schussfäden mit den Kettfäden über eine Köper-Bindung gekoppelt sind.

Die Fäden des Monogewebes, also sowohl die Kettfäden als auch die Schussfäden, verfügen in der Regel über eine Feinheit von mindestens 100 dtex. Meistens wird sogar eine Feinheit von wenigstens 150 dtex und mehr beobachtet. Das Flächengewicht des auf diese Weise realisierten Trägers aus dem Monogewebe kann zwischen 50 g/m² und 300 g/m² betragen.

Für die zumindest einseitig auf den Träger aufgebrachte Klebebeschichtung empfiehlt die Erfindung vorteilhaft eine Selbstklebemasse, die beispielhaft eine Kautschuk-, Acrylat- oder Silikonklebemasse sein kann. Grundsätzlich sind natürlich auch andere Klebemassen denkbar, die beispielhaft als Dispersion oder aus der Schmelze heraus auf den Träger aufgebracht werden. Als Grammatur für die Klebebeschichtung empfiehlt die Erfindung Werte im Bereich von 50 g/m² bis 200 g/m².

Das auf diese Weise zur Verfügung gestellte Klebeband kann prinzipiell als spiral- oder wendelförmig um Kabel geführtes Wickelband ausgebildet sein. Alternativ hierzu kann mit Hilfe des Klebebandes auch eine Längsumhüllung realisiert werden. In diesem Fall wird das Klebeband in Längsrichtung um die zu ummantelnden Kabel geschlungen.

Im Ergebnis wird ein Klebeband mit einem neuartigen Monogewebe als Träger zur Verfügung gestellt. Die an dieser Stelle realisierte Dreilagigkeit insbesondere mit den nicht miteinander verbundenen abriebfesten Kettfäden führt in Kombination mit den die Zwischenschicht bildenden elastischen Schussfäden insgesamt dazu, dass nicht nur eine hohe Abriebfestigkeit, sondern auch eine besondere Schnittfestigkeit und Schlagfestigkeit beobachtet wird, die den Anforderungen insbesondere nach LV 312-3 (2009) genügt.

Das lässt sich im Kern darauf zurückführen, dass die äußere Schicht bei einer Schnittbelastung oder der Prüfung auf Schlagfestigkeit zunächst wie ein erster Schutz oder eine Panzerung wirkt. Hierfür sorgen primär die die äußere Schicht bildenden Kettfäden. Tatsächlich ist die äußere Schicht mit einem besonderen Abriebschutz ausgerüstet. Zusätzlich sorgt die mit der äußeren Schicht nicht verbundene innere Schicht für einen weitergehenden Schutz. Denn die zugehörigen Kettfäden der inneren Schicht können sich zu gewissem Grad gegenüber den Kettfäden der äußeren Schicht bewegen und werden dadurch Stoß- oder Schlagbeanspruchungen nicht unmittelbar auf die innere Schicht übertragen. Für diese gegenseitige Entkopplung sorgt insgesamt die Zwischenschicht aus den vorteilhaft elastischen Schussfäden.

Aufgrund der beschriebenen Elastizität und der damit verbundenen Rückstellfähigkeit des erfindungsgemäßen Monogewebes kommt es in gewisser Weise zu einer Anpassung an das Schlagwerkzeug bzw. an schlagend beaufschlagende Kanten, so dass eine hohe Abriebbeständigkeit und auch eine erhöhte Reiß- und Schnittbeständigkeit beobachtet wird.

Hinzu kommt, dass das erfindungsgemäße Klebeband mit dem speziell ausgelegten Monogewebe insgesamt mit einer gesteigerten Anzahl an Fäden pro cm² gegenüber bisherigen Einschichtgeweben ausgerüstet ist. Tatsächlich werden insgesamt bis zu 50 Kettfäden pro cm und wenigstens ebenso viele Schussfäden pro cm beobachtet, so dass die Anzahl der Fäden pro cm² im Vergleich beispielsweise zum Einschichtgewebe nach der EP 2 322 385 A1 deutlich höher ist. Dadurch wird der gewünschte hohe Abriebschutz in Verbindung mit der gesteigerten Schnittfestigkeit beobachtet. Hierin sind die wesentlichen Vorteile zu sehen.

Im Folgenden wird die Erfindung anhand einer lediglich ein Ausführungsbeispiel darstellenden Zeichnung näher erläutert; es zeigen:
- **Fig. 1**: das erfindungsgemäße Klebeband schematisch und
- **Fig. 2**: einen Schnitt durch den Gegenstand nach Fig. 1.

In den Figuren ist ein Klebeband dargestellt, welches sich aus einem als Monogewebe ausgebildeten abriebfesten textilen Träger 1, 3, 2, 4 zusammensetzt. Der textile Träger 1, 3, 2, 4 ist mit einer Klebebeschichtung 7 ausgerüstet. Die Klebebeschichtung 7 findet sich in der Regel innenseitig des textilen Trägers 1, 3, 2, 4, und zwar in beispielsweise auf ein oder mehrere Kabel aufgewickeltem Zustand.

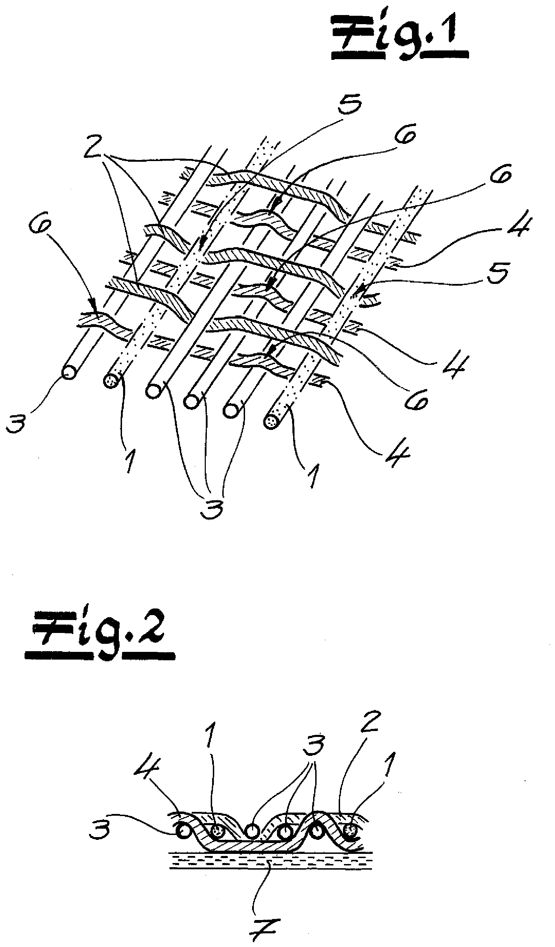

Der abriebfeste textile Träger 1, 3, 2, 4 ist insgesamt als Monogewebe ausgebildet. Tatsächlich ist das Monogewebe dreilagig mit abriebfesten Kettfäden 1, 3, ausgerüstet. Die Kettfäden 1, 3 sind nicht miteinander verbunden. Tatsächlich erkennt man anhand der Fig. 1, dass zunächst einmal Kettfäden 1 vorgesehen sind, die eine äußere Schicht definieren. Darüber hinaus sind Kettfäden 3 vorgesehen, die eine innere Schicht des Monogewebes bzw. des textilen Trägers 1, 3, 2, 4 bilden.

Die Kettfäden 1, 3 werden mithilfe von Schussfäden 2, 4 zu dem Monogewebe bzw. dem textilen Träger 1, 3, 2, 4 gekoppelt. Dazu wird im Rahmen des Ausführungsbeispiels und nicht einschränkend derart gearbeitet, dass die Schussfäden 2, 4 über jeweils eine Köper-Bindung mit den zugehörigen Kettfäden 1, 3 gekoppelt sind. Eine solche Köper-Bindung zeichnet sich dadurch aus, dass der betreffende Schussfaden 2, 4 unter einem Kettfaden 1 bzw. 3 hindurchgeht und danach über mindestens zwei Kettfäden 1 bzw. 3 hinweg.

Betrachtet man beispielsweise den mittleren Schussfaden 2 in der Fig. 1, so geht er zunächst unter dem rechts in der Fig. 1 zu erkennenden Kettfaden 1 der äußeren Schicht hindurch. Danach geht der fragliche Schussfaden 2 über mindestens zwei innere Kettfäden 3 hinweg, vorliegend über drei innere Kettfäden 3. Danach geht der betreffende Schussfaden 2 wieder unter dem nächsten äußeren Kettfaden 1 hindurch. Im Vergleich zu diesem gleichsam mittleren Schussfaden 2 sind die benachbarten Schussfäden 2 jeweils versetzt orientiert. Jedenfalls werden auf diese Weise seitens der Schussfäden 2 Bindungspunkte 5 mit der äußeren Schicht bzw. den äußeren Kettfäden 1 gebildet.

Die zusätzlich vorgesehenen Schussfäden 4 führen demgegenüber zu weiteren Bindungspunkten 6 mit der inneren Schicht bzw. den inneren Kettfäden 3. Man erkennt, dass die Bindungspunkte 5, 6 nicht zusammenfallen bzw. gegeneinander verschoben sind. Das heißt, die Bindungspunkte 5, 6 sind so ausgelegt, dass ein Bindungspunkt 5, 6 der Zwischenschicht bzw. der Schussfäden 2, 4 mit der äußeren Schicht bzw. den äußeren Kettfäden 1, das heißt vorliegend die Bindungspunkte 5, niemals mit der Position des Bindungs punktes 6 der Zwischenschicht bzw. der Schussfäden 2, 4 mit der inneren Schicht bzw. der inneren Kettfäden 3 übereinstimmt. Dadurch kommt es zu der Trennung der Kettfäden 1, 3 voneinander, weil nämlich die äußeren Kettfäden 1 von den inneren Kettfäden 3 unterschieden werden können. In Verbindung mit der zusätzlichen Elastizität der Schussfäden 2, 4 sind dadurch in gewissem Maße elastische Bewegungen der Kettfäden 1 bzw. 3 zueinander möglich.

Tatsächlich sind vorliegend die Kettfäden 1, 3 aus beispielsweise PE, PA, PET gefertigt, wie dies einleitend bereits beschrieben worden ist. Außerdem kann es sich bei den Kettfäden 1, 3 ebenso wie bei den Schussfäden 2, 4 um Bikomponentenfäden handeln, wie dies einleitend erläutert wurde. Auf diese Weise sind in der Regel sowohl die äußere Schicht als auch die innere Schicht abriebfest gestaltet, erreichen nämlich zumindest die Abriebklasse C nach LV 312-1 (2009). Insbesondere erfüllen die äußere Schicht und/oder innere Schicht sogar die Klasse D nach 312-1. Außerdem sind beide Schichten bzw. ist zumindest die äußere Schicht schlagfest entsprechend der zuvor bereits genannten Norm LV 312-3 ausgebildet.

Die Schussfäden 2, 4 sind ganz oder teilweise aus einem Elastomer hergestellt. Außerdem wird zwischen den Schussfäden 2, 4 und den Kettfäden 1, 3 im Rahmen des Ausführungsbeispiels die zuvor bereits angesprochene Köper-Bindung beobachtet. Die Fäden 1, 3, 2, 4 des Monogewebes verfügen im Allgemeinen über eine Feinheit von mindestens 100 dtex. Außerdem ist das Flächengewicht des auf diese Weise realisierten Trägers 1, 3, 2, 4 im Bereich von 50 g/m² bis 300 g/m² angesiedelt.

Die Anzahl der Kettfäden 1, 3 kann zwischen 8/cm bis 50/cm betragen. Die Anzahl der Schussfäden 2, 4 kann von 8/cm bis zu 70 /cm ausgelegt sein, so dass insgesamt die Fadendichte pro cm² bei dem erfindungsgemäßen textilen Träger 1, 3, 2,4 deutlich höher angesiedelt ist, als bei dem den Ausgangspunkt bildenden Monogewebe nach der EP 2 322 385 A1.

Bei der Klebebeschichtung 7 handelte es sich schließlich vorteilhaft um eine Selbstklebemasse, die beispielsweise auch Acrylatbasis auf den fraglichen Träger 1, 3, 2, 4 im Zuge einer Schmelzbeschichtung aufgebracht werden kann. Das gilt selbstverständlich nur beispielhaft und ist keineswegs einschränkend.

## Patentansprüche

1. Wickelband zum Ummanteln von Kabeln in Automobilen, mit einem als Monogewebe ausgebildeten textilen Träger (1, 3, 2, 4), und mit einer Klebebeschichtung (7) auf zumindest einer Seite des Trägers (1, 3, 2, 4),
**dadurch gekennzeichnet , dass**
das Monogewebe zumindest dreilagig ausgebildet ist, wobei
nicht miteinander verbundene abriebfeste Kettfäden (1, 3) sowohl eine äußere Schicht als auch eine innere Schicht bilden, und wobei
eine Zwischenschicht aus ganz oder teilweise aus einem Elastomer hergestellten Schussfäden (2, 4) vorgesehen ist, deren Bindungspunkte (5) mit der äußeren Schicht nicht mit denjenigen Bindungspunkten (6) der inneren Schicht zusammenfallen.

2. Wickelband nach Anspruch 1, **dadurch gekennzeichnet, dass** die abriebfesten Kettfäden (1, 3) aus beispielsweise PE, PA oder PET hergestellt sind.

3. Wickelband nach Anspruch 1 oder 2, **dadurch gekennzeichnet, dass** die abriebfesten Kettfäden (1, 3) zugleich schnittfest ausgebildet sind.

4. Wickelband nach einem der Ansprüche 1 bis 3, **dadurch gekennzeichnet, dass** die abriebfesten Kettfäden (1, 3) als Bikomponentenfäden ausgebildet sind.

5. Wickelband nach einem der Ansprüche 1 bis 4, **dadurch gekennzeichnet, dass** die Schussfäden (2, 4) über eine Köper-Bindung mit den Kettfäden (1, 3) gekoppelt sind.

6. Wickelband nach einem der Ansprüche 1 bis 5, **dadurch gekennzeichnet, dass** die Fäden (1, 3, 2, 4) des Monogewebes eine Feinheit von mindestens 100 dtex, insbesondere eine Feinheit von 150 dtex und mehr, aufweisen.

7. Wickelband nach einem der Ansprüche 1 bis 6, **dadurch gekennzeichnet, dass** das Flächengewicht des Trägers (1, 3, 2, 4) zwischen 50 g/m² und 300 g/m² beträgt.

8. Wickelband nach einem der Ansprüche 1 bis 7, **dadurch gekennzeichnet, dass** die Klebebeschichtung (7) als Selbstklebemasse beispielsweise auf Acrylatbasis ausgebildet ist.

## Claims

1. Wrapping tape for surrounding cables in automobiles, having a textile carrier (1, 3, 2, 4) in the form of a single fabric, and having an adhesive coating (7) on at least one side of the carrier (1, 3, 2, 4),
**characterized in that**
the single fabric is constructed with at least three plies, wherein
abrasion-resistant warp threads (1, 3) that are not connected to each other form both an outer layer and an inner layer, and wherein
an intermediate layer consisting of weft threads (2, 4) produced entirely or partly from an elastomer is provided, whose binding points (5) with the outer layer do not coincide with the binding points (6) of the inner layer.

2. Wrapping tape according to Claim 1, **characterized in that** the abrasion-resistant warp threads (1, 3) are produced for example from PE, PA or PET.

3. Wrapping tape according to Claim 1 or 2, **characterized in that** the abrasion-resistant warp threads (1, 3) are simultaneously designed to be cut-resistant.

4. Wrapping tape according to any one of Claims 1 to 3, **characterized in that** the abrasion-resistant warp threads (1, 3) are constructed as bicomponent threads.

5. Wrapping tape according to any one of Claims 1 to 4, **characterized in that** the weft threads (2, 4) are coupled with the warp threads (1, 3) by means of a twill binding.

6. Wrapping tape according to any one of Claims 1 to 5, **characterized in that** the threads (1, 3, 2, 4) of the single fabric have a fineness of at least 100 dtex, in particular a fineness of 150 dtex and more.

7. Wrapping tape according to any one of Claims 1 to 6, **characterized in that** the basis weight of the carrier (1, 3, 2, 4) is between 50 g/m² and 300 g/m².

8. Wrapping tape according to any one of Claims 1 to 7, **characterized in that** the adhesive coating (7) is in the form of a self-adhesive substance, on an acrylate base, for example.

## Revendications

1. Bande d'enroulement pour envelopper des câbles dans le secteur automobile, avec un support textile (1, 3, 2, 4) et avec un revêtement adhésif (7) sur au moins un côté du support (1, 3, 2, 4) constitué sous la forme d'un monotissu
**caractérisée en ce que**
le monotissu est constitué au moins en trois couches, sachant que
des fils de chaîne résistants à l'usure par abrasion (1, 3) forment aussi bien une couche extérieure qu'une couche intérieure et sachant qu'
une couche intermédiaire en fils de trame (2, 4) fabriqués entièrement ou en partie dans un élastomère est prévue dont les points de liaison (5) avec la couche extérieure ne coïncident pas avec les points de liaison (6) de ce type de la couche intérieure.

2. Bande d'enroulement selon la revendication 1, **caractérisée en ce que** les fils de chaîne résistants à l'usure par abrasion (1, 3) sont fabriqués par exemple en polyéthylène (PE), polyamide (PA) ou en polyéthylène (PET).

3. Bande d'enroulement selon la revendication 1 ou 2, **caractérisée en ce que** les fils de chaîne résistants à l'usure par abrasion (1, 3) sont constitués en même temps résistants à la coupe.

4. Bande d'enroulement selon l'une quelconque des revendications 1 ou 3, **caractérisée en ce que** les fils de chaîne résistants à l'usure par abrasion (1, 3) sont constitués sous la forme de fils biconstituants.

5. Bande d'enroulement selon l'une quelconque des revendications 1 à 4, **caractérisée en ce que** les fils (2, 4) sont couplés aux fils de chaîne (1, 3) par le biais d'une liaison à armure croisée.

6. Bande d'enroulement selon l'une quelconque des revendications 1 à 5, **caractérisée en ce que** les fils (1, 3, 2, 4) du monotissu comportent une finesse d'au moins 100 dtex, en particulier une finesse de 150 dtex et plus.

7. Bande d'enroulement selon l'une quelconque des revendications 1 à 6, **caractérisée en ce que** le grammage du support (1, 3, 2, 4) se situe entre 50 g/m² et 300 g/m².

8. Bande d'enroulement selon l'une quelconque des revendications 1 à 7, **caractérisée en ce que** le revêtement adhésif (7) est constitué sous la forme d'une masse autoadhésive, par exemple sur une base acrylate.
